# EUROPEAN PATENT APPLICATION

(11) **EP 4 694 578 A1**
(43) Date of publication of application: **11.02.2026**
(21) Application number: 24193840.6
(22) Date of filing: 09.08.2024
(51) Int. Cl.: H05B 45/18, G05B 15/02, H05B 47/175

(54) **DEVICES, SYSTEMS, AND METHODS FOR DECREASING THE CARBON FOOTPRINT OF HEATING**

(71) Applicant: Helvar Oy Ab, 02150 Espoo (FI)
(72) Inventor: Juslén, Henri, 02150 ESPOO (FI); Mörsky, Tuomo, 02150 ESPOO (FI)
(74) Representative: Papula Oy

(57) **Abstract**

A building automation system comprises a plurality of illuminator devices (301, 302, 303, 304, 305, 306) configured to emit radiation in at least the form of visible light, and a control system (307) coupled to said plurality of illuminator devices and configured to control operation of said plurality of illuminator devices. The control system (307) is configured to receive first information (316), which is temperature information indicative of temperatures within indoor spaces in which at least some of said plurality of illuminator devices (301, 302, 303, 304, 305, 306) are located, and to control the operation of said plurality of illuminator devices (301, 302, 303, 304, 305, 306) on basis of at least the first information (316).

## Description

### FIELD OF THE INVENTION

The invention is related to the field of controlling a building automation system that includes a lighting system. In particular, the invention is related to controlling a building automation system of said kind in a way that allows establishing and maintaining convenient indoor temperatures but reducing carbon footprint.

### BACKGROUND OF THE INVENTION

While some variation exists depending on personal preference, users tend to perceive about 21°C as an optimal temperature indoors. Heating systems of various level of sophistication are used to establish and maintain such temperatures. Unfortunately, many heating systems that are used at the time of writing this text are based on burning fossil fuels like coal, oil, or natural gas either in a dedicated furnace of the building in question or at a centralized heating plant from which the thermal energy is distributed as municipal district heat. In the fight against climate change, it would be preferable to find ways to establish and maintain convenient indoor temperatures without causing so much greenhouse gas emissions. Concerning the production and consumption of electric energy, it would be preferable to enable cost efficiency and grid balancing.

### SUMMARY

It is an objective to present a building automation system and devices that enable more efficient and more environmentally sustainable ways of establishing and maintaining indoor temperatures. Another objective is that the system and devices enable utilising available electric energy in a cost-effective way. A yet further objective is to enable using the building automation network as a balancing factor in an electricity distribution grid.

These and other advantageous objectives are met by using illuminator devices not only for illumination but also for temperature control in a systematic way that takes into account the radiation emitted by the illuminator devices as a contribution to heating.

According to a first aspect, there is provided a building automation system that comprises a plurality of illuminator devices configured to emit radiation in at least the form of visible light and a control system coupled to said plurality of illuminator devices and configured to control operation of the plurality of illuminator devices. The control system is configured to receive first information, which is temperature information indicative of temperatures within indoor spaces in which at least some of said plurality of illuminator devices are located. The control system is configured to control the operation of said plurality of illuminator devices on basis of at least the first information.

According to an embodiment, said control system is configured to compare a measured temperature indicated by said first information to a predetermined threshold temperature and, in response to finding said measured temperature to be less than said threshold temperature, make at least some of said plurality of illuminator devices increase their amount of emitted radiation. This involves at least the advantage that the building automation system may contribute to the maintaining of a target temperature without having to install so many dedicated heater devices.

According to an embodiment, the control system is configured to, in response to a finding said measured temperature to be less than said threshold temperature, make at least some of said plurality of illuminator devices increase their amount of emitted radiation in the form of visible light. This involves at least the advantage that a lighting subsystem may be used to contribute to the maintaining of appropriate temperatures without requiring the illuminator devices to comprise any uncommon features.

According to an embodiment, at least a subset of said plurality of illuminator devices are configured to emit radiation in the form of infrared radiation. The control system may then be configured to, in response to finding said measured temperature to be less than said threshold temperature, make at least some illuminator devices in said subset increase their amount of emitted infrared radiation. This involves at least the advantage that the lighting subsystem may be used to contribute to the maintaining of appropriate temperatures without having to cause visible changes in the level of illumination.

According to an embodiment, the control system is configured to receive second information, which is indicative of a degree of sustainability of electric energy available for consumption in the building automation system. The control system may then be configured to control the operation of said plurality of illuminator devices on basis of at least the first information and the second information. This involves at least the advantage that the aim of maintaining appropriate temperatures may be combined with an aim of reducing carbon footprint and other disadvantageous environmental effects.

According to an embodiment, the control system is configured to compare a degree of sustainability indicated by said second information to a predetermined threshold degree and, in response to finding said indicated degree of sustainability to be higher than said threshold degree, make at least some of said plurality of illuminator devices (301, 302, 303, 304, 305, 306) increase their amount of emitted radiation. This involves at least the advantage that the use of the illuminator devices for the purposes described above may be optimised in the sense of sustainability of consumed energy.

According to an embodiment, the control system is configured to compare a first degree of sustainability indicated by said second information, which first degree is indicative of a degree of sustainability of electric energy available for consumption in the building automation system in a first, shorter term, to a second degree of sustainability indicated by said second information, which second degree is indicative of a degree of sustainability of electric energy available for consumption in the building automation system in a second, longer term. On basis of said comparing of the first degree of sustainability to said second degree of sustainability, the control system may then control the relative amount of radiation emitted by at least some of said plurality of illuminator devices in said first term in relation to the relative amount of radiation emitted by the same illuminator devices in said second term. This involves at least the advantage that the use of the illuminator devices for the purposes described above may be further optimised in the sense of sustainability of consumed energy.

According to an embodiment, the control system is configured to receive third information, which is indicative of one or more users having been detected within the indoor spaces in which at least some of said plurality of illuminator devices are located. The control system may then be configured to control the operation of said plurality of illuminator devices additionally on basis of the third information. This involves at least the advantage that the making of decisions about the use of the illuminator devices may be more appropriately adapted to the needs of users.

According to an embodiment, the building automation system comprises at least one heater device different from any of said plurality of illuminator devices. The control system may then be configured to control relative amounts of energy consumed by said plurality of illuminator devices on one hand and by said at least one heater device on the other hand on basis of at least the first information. This involves at least the advantage that the use of devices of different capacities can be optimised in the sense of maintaining a temperature and achieve the other advantageous objectives.

According to an embodiment, the control system is configured to receive fourth information, which is information indicative of common sensitivity of users to temperatures within indoor spaces in which at least some of said plurality of illuminator devices are located. The control system may then be configured to control the operation of said plurality of illuminator devices on basis of the fourth information. This involves at least the advantage that the task of controlling temperatures may be accurately adapted to subjective needs of users.

According to an embodiment, said fourth information is indicative of humidity of air in said indoor spaces in which at least some of said plurality of illuminator devices are located. This involves at least the advantage that energy can be spared by not triggering additional heating if air is so dry that it is not needed even if a pure temperature measurement would show low values.

According to a second aspect, there is provided a lighting and heating device comprising a lighting driver configured to output controllable amounts of electric current to one or more sources of visible light, a heating driver configured to output controllable amounts of electric current to one or more sources of infrared radiation, a receiver of user activity indications, and a control unit coupled to said receiver, to said lighting driver, and to said heating driver. Said control unit is configured to, in response to a user activity indication received through said receiver, make said lighting driver increase the amount of electric current it outputs at a first rate of increase and make said heating driver increase the amount of electric current it outputs at a second rate of increase, which second rate of increase is slower than said first rate of increase.

According to an embodiment, said user activity indication is information indicative of detected presence or movement in or close to an area illuminated by said sources of visible light. The control unit may then be configured to, in response to a user passivity indication subsequent to a previously received user activity indication, make said lighting driver decrease the amount of electric current it outputs at a first rate of decrease and make said heating driver decrease the amount of electric current it outputs at a second rate of decrease, which second rate of decrease is faster than said first rate of decrease. This involves at least the advantage that energy can be spared by not heating spaces where heating is not needed.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a node device of a building automation system,
**figure 2** illustrates examples of building automation systems,
**figure 3** illustrates a building automation system,
**figure 4** illustrates calculational values related to the use of various kinds of buildings,
**figure 5** illustrates node devices of a building automation system, and
**figure 6** illustrates a node device of a building automation system.

### DETAILED DESCRIPTION

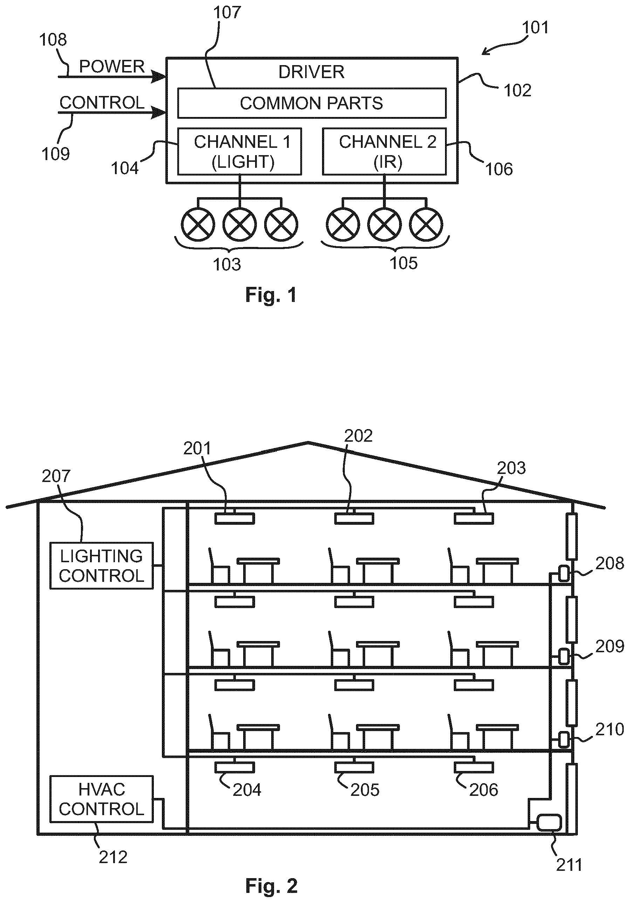

Fig. 1 illustrates an illuminator device 101, parts of which include (but are not necessarily limited to) a driver 102 and one or more light sources. The driver 102 is an electronic device designed and built for the purpose of making the light sources emit radiation at some one or more desired intensities. In the case of fig. 1 there is a first set 103 of light sources driven with a first channel 104 and a second set 105 of light sources driven with a second channel 106 of the driver. Some parts of the driver 102 may be common to both (or all, if there are more than two) channels, as indicated by the common parts block 107 in fig. 1. The illuminator device 101 receives its operating power through a power input 108 and control information, indicative of desired actions, through a control input 109. If the illuminator device 101 is to operate as a node device of a building automation system, the power input 108 may be a coupling to the internal AC distribution grid of the building. The control input 109 may comprise means for setting up and maintaining one or several physical forms of exchanging control information. Examples include, but are not limited to, a control bus such as DALI (Digital Addressable Lighting Interface); a sensor interface; a wireless interface such as BLE (Bluetooth Low Energy) or WiFi; and/or the like.

In an illuminator device like that of fig. 1 it is possible that not all light sources are adapted to emit light of similar wavelengths, wavelength ranges, and/or spectra. As a non-limiting example, the first set 103 of light sources may be sources of visible light such as white LEDs. The second set 105 of light sources may be sources of infrared radiation, such as IR LEDs, metal filaments, quartz heater elements, and/or the like. Additionally or alternatively, the first set 103 of light sources may be white LEDs of a first, "warmer" spectrum of emitted light and the second set 105 of light sources may be white LEDs of a second, "colder" spectrum of emitted light. If there are more than two channels, any combinations of light sources of different wavelengths, wavelength ranges, and/or spectra can be used.

Fig. 2 illustrates a building automation system that includes a first building automation network for lighting and a second building automation network for HVAC (heating, ventilation, and air conditioning) purposes. The first building automation network comprises illuminator devices, examples of which are shown with reference designators 201, 202, 203, 204, 205, and 206, as well as a centralized lighting controller 207. These are only a limited set of example devices, as a building automation network for lighting may include other kinds of devices such as switches, control panels, sensors, communication links, and the like. In fig. 2, the second building automation network comprises heaters, examples of which are shown with reference designators 208, 209, 210, and 211, as well as a centralized heating controller 212. Similar to the first building automation network also the HVAC network may include other kinds of devices such as switches, control panels, sensors, communication links, and the like.

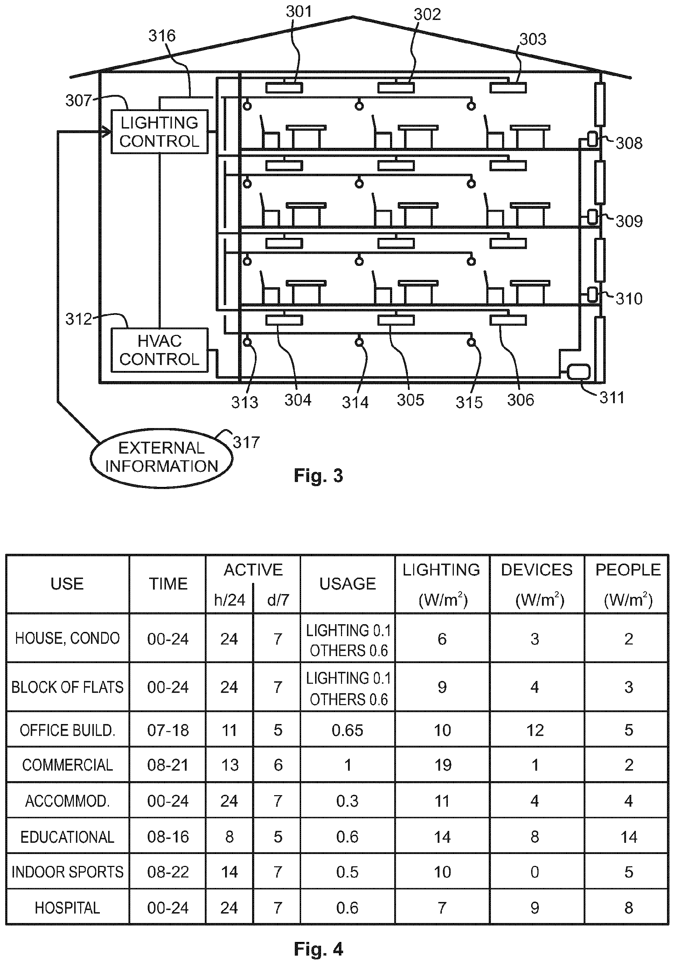

In a conventional approach, lighting and HVAC functions within a building are on the responsibility of two separate networks, like in fig. 2. Fig. 3 illustrates an alternative building automation system, in which there is at least some level of cooperation between lighting and HVAC networks. In such a more advanced system, important advantages may be gained by allowing devices that would conventionally have been seen as just illuminator devices to play an active role in heating.

The building automation system shown in fig. 3 comprises a plurality of illuminator devices configured to emit radiation in at least the form of visible light. Examples of such illuminator devices are shown in fig. 3 with reference designators 301, 302, 303, 304, 305, and 306. A control system 307 is coupled to the plurality of illuminator devices and configured to control their operation. In fig. 3 this is illustrated with lines, as is if the control system 307 would have wired control connections to the illuminator devices. However, this is only a graphical convention, as the couplings through which the control system 307 can control the operation of the illuminator devices may be wireless. It may also involve a combination of various techniques of communication.

Node devices of a building automation network for HVAC purposes are also shown in fig. 3, using reference designators 308, 309, 310, and 311. There is also a separate HVAC controller 312. These are, however, only optional concerning the following description of exemplary operation of the building automation system.

Also shown in fig. 3 are sensors capable of detecting environmental conditions within the building in which the building automation system is installed and operating. Examples are the sensors shown with reference designators 313, 314, and 315. The control system 307 is configured to receive temperature information 316 indicative of temperatures within indoor spaces in which at least some of the illuminator devices 301, 302, 303, 304, 305, and 306 are located. The control system 307 is configured to control the operation of the plurality of illuminator devices 301, 302, 303, 304, 305, and 306 on basis of at least said temperature information.

In fig. 3, the sensors 313, 314, and 315 are shown as separate devices, with a separate communications network coupling them to the control system 307. This is, however, only a graphical convention and does not represent any limiting description of how the sensing of temperatures should be arranged. Many lighting networks - as well as other kinds of building automation networks - already include sensors, some of which may measure only temperature while others may be multifunctional sensors and measure quantities like temperature, humidity, volatile organic compounds, carbon dioxide, audible noise, ambient light, and/or others. Such multifunctional sensors may be used to provide the control system 307 with the temperature information. Sensors may provide the control system 307 with also the other kinds of information they produce, as such information may be useful for making decisions of the kind described in this text.

Sensors may be separate devices, or they may be incorporated into (or operate as subsystems of) other devices, like LED drivers. Some node devices of building automation networks may include integral temperature sensors, a primary purpose of which may be to monitor the internal operating temperature of such devices. The readings from such integral temperature sensors may be sufficient to provide the control system 307 with the required information indicative of temperature. At least when such a node device has not been otherwise active for a period, the integral temperature sensor therein measures essentially the ambient temperature at the location where the node device is installed. Also when a node device is active, there may be predetermined information about what will be the relation between ambient and internal temperatures at certain levels of operating power, so a measured internal temperature together with information indicative of momentary operating power may be enough.

Controlling illuminator devices on basis of a measured temperature at locations illuminated by them opens up the possibility of using illuminator devices essentially as a part of the heating system of the building. Although illuminator devices are primarily producers of visible light, it must be noted that light is actually just a form of electromagnetic radiation and, as such, radiated energy. Light that becomes absorbed in air and/or solid structures will eventually become converted into heat. This is true regardless of whether one understands "light" emitted by illuminator devices to mean solely visible light or (at least in part) infrared radiation.

Fig. 4 is a table that illustrates some calculational values related to the use of various kinds of buildings. In the table, eight categories of buildings are shown. The topmost row in the table represents separate houses, condominiums, and the like. The second row represents blocks of flats, and the third row represents office buildings. The fourth row represents commercial buildings, and the fifth row represents buildings used for commercial accommodation, like hotels. The three last rows in the table represent educational buildings (schools, children's daycare, and the like), buildings used for indoor sports, and hospitals, respectively.

The column labeled "time" indicates typical hours of the day when the building is in use. The column labeled "active" indicates, how many hours (per 24 hours) and how many days (per 7 days) the building is typically in active use. The column labeled "usage" indicates, as a coefficient between 0.0 and 1.0, the relative proportion of the active usage time during which the heating effect of lighting, consumer devices, and people may be estimated to be present. The three last columns indicate the estimated heating power in watts per square meter that may be associated with lighting, consumer devices, and people, respectively.

The values in the table of fig. 4 are typical to a location at the upper commonly inhabited latitudes of the northern hemisphere, particularly to the latitudes of Finland. Similar tables can be presented for other locations on Earth by collecting the available statistical data, data about habitual behavior of users, and the like.

As already pointed out earlier in this text, the thermal energy conventionally used buildings for the sole purpose of heating may come from burning fossil fuels or be, at least at time, a less preferable alternative for other reasons. Electricity, on the other hand, may come from renewable or at least less polluting sources such as wind turbines, solar panels, nuclear power plants, or hydroelectric power stations. How large a proportion of the available electric energy comes from such sources may be described as a degree of sustainability of the electric energy available for consumption. Producing at least some of the heat needed in a building electrically, using illuminator devices, rather than by relying solely on the less sustainable thermal energy, may help to reduce the carbon footprint of maintaining and operating the building. Another possible advantage of using illuminator devices to produce heat comes from the accurate focusing on desired locations that can be achieved therethrough.

An example of using the illuminator devices 301, 302, 303, 304, 305, and 306 for heating could be described as "the last degrees" approach, meaning that while heater devices may be responsible for maintaining an almost sufficient temperature, the last few degrees between an otherwise established temperature and a target temperature come through operation of the illuminator devices.

In fig. 3, the control system 307 may be considered to monitor the temperature measured by the sensors 313, 314, and 315. Other possible ways of making the control system 307 receive information indicative of temperatures within indoor spaces in which the illuminator devices are located have been considered earlier in this text. The control system 307 may be configured to compare a measured temperature indicated by such information to a predetermined threshold or target temperature. In response to finding the measured temperature to be less than the threshold or target temperature, the control system 307 may make at least some of the plurality of illuminator devices 301, 302, 303, 304, 305, and 306 increase their amount of emitted radiation. This may mean making said illuminator devices increase their amount of emitted radiation in the form of visible light. Additionally or alternatively, this may mean making said illuminator devices increase their amount of emitted radiation in the form of infrared radiation. The last-mentioned requires, naturally that at least a subset of the plurality of illuminator devices 301, 302, 303, 304, 305, and 306 are configured to emit radiation in the form of infrared radiation.

Focusing on location may mean that, at least if there is substantial coordination between locations of temperature-indicating devices and illuminator devices, the control system 307 reacts in the way described above by only making those of the illuminator devices increase their amount of emitted radiation that are co-located with sensors that indicate a difference of certain magnitude between the measured temperature and the threshold or target temperature.

Additionally, if there are suitable sensors available that detect movement and/or presence, the control system 307 may combine information coming from such sensors with the received temperature information. The information coming from movement and/or presence sensors may be called information indicative of one or more users having been detected within the indoor spaces in which at least some of said plurality of illuminator devices 301, 302, 303, 304, 305, or 306 are located. The control system 307 may be configured to control the operation of at least some of the plurality of illuminator devices 301, 302, 303, 304, 305, and 306 on basis of such information.

As an example, the control system 307 may react in the way described above by only making those of the illuminator devices increase their amount of emitted radiation that are co-located with (i) sensors that indicate a difference of certain magnitude between the measured temperature and the threshold or target temperature and (ii) sensors that indicate detected movements and/or presence. This way the control system might leave those locations colder where no users are present anyway, saving energy, and only use the illuminator devices to provide "the last degrees" at those locations where users really need them.

A typical feature of electric energy distributed through wide-area AC (Alternating Current) grids is large variation in the relation of supply and demand, as well as large variation in the degree of sustainability of the available electric energy. At least the first-mentioned has typically a significant effect on pricing, so that the price of electricity exhibits at least some rough proportionality to the ratio of demand over supply. Conventional examples of more sustainable forms of electric energy have been described earlier in this text. In a wide sense, large relative supply of electric energy in an AC grid, in comparison to demand, may also be described as indicating a momentarily better sustainability because it means that, for the period when supply tends to exceed demand, it is preferable for controllable loads to consume electric energy to keep the grid in balance. A well-balanced and predictably operating AC grid allows producers of electric energy on the grid to optimize the operation of their systems, typically leading to reduced emissions of pollutants. Grid operators are typically ready to provide some kind of compensation to parties who can dedicate capacity to intentional balancing, for example by maintaining loads the consumption of which adapts to the momentary ratio of demand over supply. Agreements between the grid operator and a party of said kind typically defines the maximum wattage of the dedicated balancing load and whether the load adapts to oversupply, overload, or both.

Operators of AC grids routinely publish information indicative of the degree of sustainability of electric energy available for consumption. In fig. 3, such information could constitute an example of external information 317 that is available for the control system 307 through an internet connection or other suitable connection to an external communications system. The control system 307 may be configured to receive such information and to control the operation of at least some of the plurality of illuminator devices 301, 302, 303, 304, 305, and 306 on basis of such information, preferably in concert with the control decisions it makes on basis of the above-mentioned information 316 indicative of temperatures.

An example of making control decisions at least partly on basis of information indicative of sustainability of electric energy is as follows. The control system 307 may be configured to compare a degree of sustainability indicated by the received information to a predetermined threshold degree. The threshold degree may be fixedly predetermined, for example as a reference value (assuming that the degree of sustainability is indicated as a value). Additionally or alternatively, the threshold degree of sustainability may be predetermined in parameterized form that enables the control system to evaluate, whether it is more preferable to produce "the last degrees" by operating the appropriate illuminator devices or by operating the heater devices. If, at a particular moment, electric energy available at the AC grid is largely produced in less sustainable ways but there is waste heat available that the nearby district heating plant should otherwise dump into the air, the degree of sustainability expressed for the electric energy is clearly lower than the current "reference value" representing the momentary sustainability of district heating. And the other way round: if the nearby district heating plant is currently burning only fossil fuels but the operator of the AC grid can tell that all wind turbines on the grid are turning at full capacity, the degree of sustainability expressed for the electric energy is clearly higher than the current "reference value" representing the momentary sustainability of district heating.

In response to finding the indicated degree of sustainability of the available electric energy to be higher than the threshold degree, the control system 307 may make at least some of said plurality of illuminator devices 301, 302, 303, 304, 305 and 306 increase their amount of emitted radiation, and vice versa.

If the information indicative of the sustainability of electric energy has any predictive nature, meaning that it enables evaluating the sustainability of available electric energy not only momentarily but in a longer term, even better educated decisions can be made by the control system. As an example, we may consider a case in which the working day is over and all people have left the office building when the outside temperature suddenly drops due to a change in the weather. Consequently, also the indoor temperatures in the building begin to fall. The control system 307 notices the falling levels in the temperature information 316 it receives. From a time-related sustainability profile, received earlier as external information 317, it knows that during the early hours of the night, the degree of sustainability of the available electric energy in the AC grid will be low. However, towards early morning there will be several hours when the predicted degree of sustainability will be high because high winds will start blowing and all wind turbines will probably be turning at full speed. The control system 307 may then decide to allow the temperatures inside the building to remain low for the moment because nobody will be there anyway, and switch all illuminator devices fully on later in the night to again heat up the indoor spaces before the users come in next morning. Or the other way round: if there are ample amounts of sustainable electric energy available first but less later, the control system 307 may switch on the illuminator devices and make them heat the building warmer than usual during the night, which then allows it to keep all further heating to minimum later when the electric energy (and the thermal energy available for heating devices) are less sustainable.

Such an approach could be described more formalistically and more generally as follows. The control system 307 may be configured to compare a first degree of sustainability indicated by the received external information 317, which first degree is indicative of a degree of sustainability of electric energy available for consumption in the building automation system in a first, shorter term, to a second degree of sustainability indicated by said external information 317. Said second degree is indicative of a degree of sustainability of electric energy available for consumption in the building automation system in a second, longer term. On basis of said comparing of the first degree of sustainability to said second degree of sustainability, the control system 307 may be configured to control the relative amount of radiation emitted by at least some of said plurality of illuminator devices 301, 302, 303, 304, 305, and 306 in said first term in relation to the relative amount of radiation emitted by the same illuminator devices in said second term.

Above it was already suggested that the control system may make decisions that involve the operation of both the illuminator devices and the heater devices. Conceptually, in fig. 3, this is illustrated by drawing a connection between the two control system blocks 307 and 312. Indeed, if suitable connections and suitable mutual readiness for cooperation exist, the lighting and HVAC controllers may be considered to constitute a single, more versatile control system.

As pointed out above, the building automation system may comprise at least one heater device 308, 309, 310, and 311 different from any of said plurality of illuminator devices 301, 302, 303, 304, 305, and 306. A combined control system 307, 312 may then be configured to control relative amounts of energy consumed by said plurality of illuminator devices 301, 302, 303, 304, 305, and 306 on one hand and by said at least one heater device 308, 309, 310, 311 on the other hand on basis of at least the temperature information 316. As explained above, control decisions in such a more versatile system may additionally be based on external information 317, like information indicative of the relative sustainability of electric energy and thermal energy that are available for consumption for the building automation system.

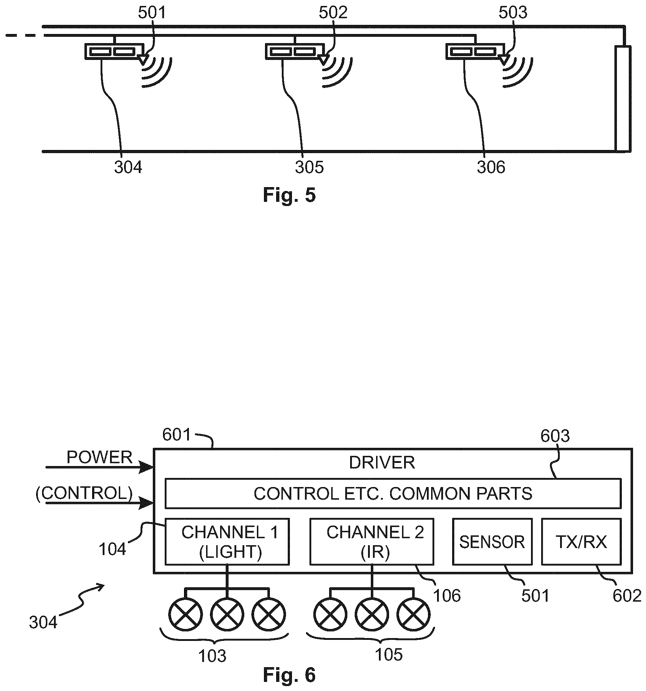

If illuminator devices are capable of emitting both visible light and infrared radiation, and if they are additionally capable of reacting to user activity indications, interesting possibilities open for making intelligent decisions about the use of electric energy. Fig. 5 is a partial enlargement of fig. 3, showing three illuminator devices 304, 305, and 306 installed in a corridor. There is a door at an end of the corridor, so users can be expected to repeatedly pass through the corridor and, hence, under each of the illuminator devices 304, 305, and 306 in order. The illuminator devices 304, 305, and 306 are equipped with respective sensors 501, 502, and 503 that allow them to detect motion and/or presence of users. The sensors 501, 502, and 503 may be PIR (passive infra-red) sensors configured to detect motion, for example.

Fig. 6 shows how one of the illuminator devices 304, 305, and 306 may look like closer up. A controllable driver 601 is coupled to receive operating power and may be coupled to receive control commands through one or more control channels, wired or wireless. Much like the illuminator device 101 described earlier with reference to fig. 1, the illuminator device of fig. 6 comprises a first set 103 of radiation sources driven by a first channel 104 in the driver and a second set 105 of radiation sources driven by a second channel 106 in the driver. For the moment, it can be assumed that the first set 103 of radiation sources includes sources of visible light and the second set 105 of radiation sources includes sources of infrared radiation. The driver 601 is equipped with a transceiver 602 of control signals and there are some parts 603 that are common to all operations of the driver, like a controlling microprocessor for example. Also a sensor 501 is shown in fig. 6.

More generally, the device shown in fig. 6 may be called a lighting and heating device. The first channel 104 may be called a lighting driver configured to output controllable amounts of electric current to one or more sources 103 of visible light. The second channel 2 may be called a heating driver configured to output controlled amounts of electric current to one or more sources 105 of infrared radiation. The transceiver 602 may be characterized as comprising a receiver of user activity indications, and the common parts block 603 may be characterized as comprising a control unit, coupled to the receiver 602, to the lighting driver 104, and to the heating driver 106.

User activity indications may come in many forms. One exemplary type of user activity indication is known from lighting systems in which a luminaire equipped with a motion and/or presence sensor reacts to a detection event recorded by the sensor by not only controlling its illumination accordingly but also by transmitting a message to other luminaires nearby. The idea in such lighting systems is that the other luminaires may, as a response to receiving the message, control their own illumination or at least take some preparatory action like estimate the probability of the detected user next appearing in their own area of illumination. Wired and/or wireless channels may be used for transmitting the message, and the communications protocol applied in the lighting system may define whether the receiving luminaires relay the message further and if so, by how many hops. Accordingly, the user activity indication mentioned above may be a message from another device of the building automation system, indicative of said other device having detected some kind of user activity.

Another exemplary type of user activity indication may be a detection event recorded by a sensor included in or directly coupled to the lighting and heating device of fig. 6. In this sense, the sensor 501 and the received 602 in fig. 6 may refer to the same subsystem of the device. More generally, the user activity indication may be information indicative of detected presence and/or movement in or close to an area illuminated by the sources 103 of visible light in the device of fig. 6.

An understandable behavioral feature of human users is that they appreciate seeing up to a certain distance around them, while they have limited capacity of sensing the accurate temperature elsewhere than at their actual location. In other words, most people need (or at least appreciate) having a certain environment around them illuminated, while they need or appreciate heating only at their exact momentary location. Making lighting devices react in advance, by preparatorily switching lights on in a direction in which the user is expected to proceed, meets this understandable behavioral feature. There is less need to make heating devices react similarly in advance, at least not as quickly, because the user will only sense the temperature after having entered a close environment of the heating device in question. This applies in particular to emitters of radiated infrared heat because they are relatively quick to switch on and because the user will feel their heating effect very soon after they were switched on.

Another behavioral feature of humans is their subjective feeling of temperature based on the colour of light. A blueish, "cold" tone of light may make a user feel cooler than a yellowish or orange "warm" light. A physical fact to be considered is that a constantly or at least intermittently moving person may feel the ambient temperature warmer than a person who does not move or moves only very little.

For this reason, the control unit 603 of fig. 6 may be configured to, in response to a user activity indication received through the receiver 602, make the lighting driver 104 increase the amount of electric current it outputs at a first rate of increase and make the heating driver 106 increase the amount of electric current it outputs at a second rate of increase, which second rate of increase is slower than said first rate of increase. This way, the control unis 603 may achieve the aim of preparatorily providing light for approaching users (or users that approached first but then stopped and stayed only at a nearby location, where they nevertheless appreciate having also the surroundings illuminated) while saving energy by not heating its immediate sphere of influence more than needed. Additionally or alternatively, the control unit may be configured to, in response to a received user activity indication, make the lighting driver 104 increase or decrease the amount of electric current it outputs to light sources of different colour temperature. This way, the control unit may achieve the aim of affecting the subjective feeling of temperature by a user before the actual physical temperature of the illuminated space changes to respond to the feeling. Additionally or alternatively, the control unit may be configured to, in response to frequently received user activity indications, make the heating driver 106 increase the amount of electric current it outputs less than in response to user activity indications that come sparsely or irregularly (but yet constantly enough to plausibly indicate that a user is present, only not moving much).

The "second rate of increase" mentioned above may be even zero. In such a case, the control system 603 could be configured to respond to a "remote" user activity indication (e.g. a motion detection message received from another device nearby) by increasing the amount of emitted visible light, but to respond to only a "local" user activity indication (e.g. a detection of movement by the sensor 501) by increasing the amount of emitted infrared radiation. Similarly, the control system could be configured to respond to a user activity indication by only increasing the current to "warm" light source (s) in order to make the user feel warmer despite the physical temperature remaining constant.

Another consequence of the behavioral feature of users explained above is that when leaving an area, the user would appreciate lights not going out immediately after them while there is little need for heating once the user is not present anymore at the exact spot. To this end, it is advantageous if a building automation system responsible for lighting and heating is capable of noticing when the user leaves and configured to react appropriately thereto.

The building automation system may be configured to produce user passivity indications indicating that a user whose motion and/or presence was detected earlier has not been detected anymore for a certain period. In a simple form, a user passivity indication means the lack of user activity indications. The control system 603 may be configured to interpret the mere absence of new user activity indications as a user passivity indication after it has lasted for a predetermined time. Other forms of user passivity indications are possible: for example, if there is a default route that users take to leave the building, and if a certain amount of motion has been detected on that route and messaged to other devices in a system, the other devices may interpret the received motion detection messaged from the exit route as a sign that all users have left.

The control unit may be configured to, in response to a user passivity indication subsequent to a previously received user activity indication, make the lighting driver 104 decrease the amount of electric current it outputs at a first rate of decrease and make the heating driver 106 decrease the amount of electric current it outputs at a second rate of decrease, which second rate of decrease is faster than said first rate of decrease. The rates of decrease may be implemented in practice for example by applying different lengths of delay after receiving the most recent user activity indication: if no fresh user activity indications have been received for X seconds, the control system 603 may start decreasing the heating, while only after Y seconds the control system 603 may start dimming the lights, where X < Y. Another possibility is that the incident that the control system 603 takes as a user passivity indication is the same for both, but the heating is just switched off (or turned to a lower level) faster than the lighting. Yet another possibility is that the control system 603 begins switching off the local infrared heating when its own sensor 501 has not made any fresh detections for some time, but begins dimming the lights only when it additionally has not received any "remote" user activity indications (e.g. a motion detection messages received from other devices nearby) for some time.

Additionally or alternatively, the control unit may be configured to, in response to a user passivity indication subsequent to a previously received user activity indication, make the lighting driver 104 decrease the amount of electric current it outputs at a probationary rate of decrease, possibly even before making the heating driver 106 decrease the amount of electric current it outputs. Such an embodiment would be based on the observation that users tend to be more sensitive to changes in lighting than to changes in temperature. If a user is still present and detects the probationary dimming of light, the user may wave their hand or provide some other signal to be detected by the system, in order to make the system realize that there is a user (or several users) still present and the lighting and heating should be still kept at the corresponding level.

Above, temperature information in the illuminated indoor spaces was considered as an important criterion on the basis of which control decisions could be made about operation of illuminator devices. However, the subjective experience of users about temperature, or common sensitivity of users to temperatures within indoor spaces, may depend also on other quantities than actual temperature. The control system 307 may be configured to receive information indicative of common sensitivity of users to temperatures within those indoor spaces in which at least some of the controlled illuminator devices 301, 302, 303, 304, 305, or 306 are located. The control system 307 may then be configured to control the operation of the illuminator devices 301, 302, 303, 304, 305, or 306 on basis of the such information.

An example of information indicative of common sensitivity of users to temperatures within indoor spaces is information about measured humidity in air. If the surrounding air is very humid, users tend to feel and notice smaller changes in temperature than if the air is very dry. So, as an example, if the control system applies some kind of threshold values of temperature in making decisions of the kind described above, the threshold values may depend on humidity. If there is a target temperature value to be achieved and maintained, and if a threshold value lower than the target temperature value should trigger additional heating by increasing the amount of emitted radiation, the difference between the target and threshold temperature values may be smaller for humid air than for dry air.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A building automation system, comprising:
- a plurality of illuminator devices (301, 302, 303, 304, 305, 306) configured to emit radiation in at least the form of visible light, and
- a control system (307) coupled to said plurality of illuminator devices and configured to control operation of said plurality of illuminator devices;
**wherein** said control system (307) is configured to receive first information (316), which is temperature information indicative of temperatures within indoor spaces in which at least some of said plurality of illuminator devices (301, 302, 303, 304, 305, 306) are located,
**and wherein** said control system (307) is configured to control the operation of said plurality of illuminator devices (301, 302, 303, 304, 305, 306) on basis of at least the first information (316).

2. A building automation system according to claim 1, wherein said control system (307) is configured to
- compare a measured temperature indicated by said first information (316) to a predetermined threshold temperature and
- in response to finding said measured temperature to be less than said threshold temperature, make at least some of said plurality of illuminator devices (301, 302, 303, 304, 305, 306) increase their amount of emitted radiation.

3. A building automation system according to claim 2, wherein said control system (307) is configured to, in response to a finding said measured temperature to be less than said threshold temperature, make at least some of said plurality of illuminator devices (301, 302, 303, 304, 305, 306) increase their amount of emitted radiation in the form of visible light.

4. A building automation system according to any of claims 2 or 3, wherein:
- at least a subset of said plurality of illuminator devices (301, 302, 303, 304, 305, 306) are configured to emit radiation in the form of infrared radiation, and
- said control system (307) is configured to, in response to finding said measured temperature to be less than said threshold temperature, make at least some illuminator devices in said subset increase their amount of emitted infrared radiation.

5. A building automation system according to any of the preceding claims, wherein:
- said control system (307) is configured to receive second information (317), which is indicative of a degree of sustainability of electric energy available for consumption in the building automation system, and
- said control system (307) is configured to control the operation of said plurality of illuminator devices (301, 302, 303, 304, 305, 306) on basis of at least the first information (316) and the second information (317) .

6. A building automation system according to claim 5, wherein said control system (307) is configured to
- compare a degree of sustainability indicated by said second information (317) to a predetermined threshold degree and
- in response to finding said indicated degree of sustainability to be higher than said threshold degree, make at least some of said plurality of illuminator devices (301, 302, 303, 304, 305, 306) increase their amount of emitted radiation.

7. A building automation system according to any of claims 5 or 6, wherein the control system (307) is configured to
- compare a first degree of sustainability indicated by said second information (317), which first degree is indicative of a degree of sustainability of electric energy available for consumption in the building automation system in a first, shorter term, to a second degree of sustainability indicated by said second information (317), which second degree is indicative of a degree of sustainability of electric energy available for consumption in the building automation system in a second, longer term, and
- on basis of said comparing of the first degree of sustainability to said second degree of sustainability, control the relative amount of radiation emitted by at least some of said plurality of illuminator devices (301, 302, 303, 304, 305, 306) in said first term in relation to the relative amount of radiation emitted by the same illuminator devices in said second term.

8. A building automation system according to any of the preceding claims, wherein:
- said control system (307) is configured to receive third information, which is indicative of one or more users having been detected within the indoor spaces in which at least some of said plurality of illuminator devices (301, 302, 303, 304, 305, 306) are located, and
- said control system (307) is configured to control the operation of said plurality of illuminator devices (301, 302, 303, 304, 305, 306) additionally on basis of the third information.

9. A building automation system according to any of the preceding claims, wherein:
- the building automation system comprises at least one heater device (308, 309, 310, 311) different from any of said plurality of illuminator devices (301, 302, 303, 304, 305, 306), and
- the control system (307, 312) is configured to control relative amounts of energy consumed by said plurality of illuminator devices (301, 302, 303, 304, 305, 306) on one hand and by said at least one heater device (308, 309, 310, 311) on the other hand on basis of at least the first information (316).

10. A building automation system according to any of the preceding claims, wherein:
- said control system (307) is configured to receive fourth information, which is information indicative of common sensitivity of users to temperatures within indoor spaces in which at least some of said plurality of illuminator devices (301, 302, 303, 304, 305, 306) are located, and wherein said control system (307) is configured to control the operation of said plurality of illuminator devices (301, 302, 303, 304, 305, 306) on basis of the fourth information.

11. A building automation system according to claim 10, wherein said fourth information is indicative of humidity of air in said indoor spaces in which at least some of said plurality of illuminator devices (301, 302, 303, 304, 305, 306) are located.

12. A lighting and heating device (304), comprising:
- a lighting driver (104) configured to output controllable amounts of electric current to one or more sources (103) of visible light,
- a heating driver (106) configured to output controllable amounts of electric current to one or more sources (105) of infrared radiation,
- a receiver (602) of user activity indications, and
- a control unit (603) coupled to said receiver (602), to said lighting driver (104), and to said heating driver (106);
wherein said control unit (603) is configured to, in response to a user activity indication received through said receiver (602), make said lighting driver (104) increase the amount of electric current it outputs at a first rate of increase and make said heating driver (106) increase the amount of electric current it outputs at a second rate of increase, which second rate of increase is slower than said first rate of increase.

13. A lighting and heating device according to claim 12, wherein:
- said user activity indication is information indicative of detected presence or movement in or close to an area illuminated by said sources (103) of visible light,
- said control unit (603) is configured to, in response to a user passivity indication subsequent to a previously received user activity indication, make said lighting driver (104) decrease the amount of electric current it outputs at a first rate of decrease and make said heating driver (106) decrease the amount of electric current it outputs at a second rate of decrease, which second rate of decrease is faster than said first rate of decrease.
